# EUROPÄISCHE PATENTSCHRIFT

(11) **EP 0 354 250 B1**
(45) Veröffentlichungstag und Bekanntmachung des Hinweises auf die Patenterteilung: **23.06.1993**
(21) Anmeldenummer: 88112450.7
(22) Anmeldetag: 01.08.1988
(51) Int. Cl.: G01N 3/04, G01N 3/06, G01N 3/20

(54) **Durchstossvorrichtung für die Prüfung von Werkstoffproben oder Bauteilen**
Perforation test apparatus for material samples or components
Appareil d'essais de perforation pour échantillons de matériau ou pour pièces détachées

(43) Veröffentlichungstag der Anmeldung: 14.02.1990
(73) Patentinhaber: CARL SCHENCK AG, D-64273 Darmstadt (DE)
(72) Erfinder: Hintz, Gerhard, D-6101 Rossdorf 1 (DE); Jatho, Ralf, Dipl.-Ing., D-6104 Seeheim-Jugenheim (DE); Keller, Günter, Ing. grad., D-6101 Modautal 1 (DE)
(74) Vertreter: Brandt, Ernst-Ulrich, Dipl.-Phys., Dipl.-Ing.

(56) Entgegenhaltungen:
- DE-C- 679 588
- US-A- 2 002 552
- US-A- 4 625 563
- INDUSTRIAL LABORATORY, Band 41, Nr. 8, August 1975, Seiten 1275-1276, Plenum Publishing Corp., New York, US; Yu.M. KATTASHOV: "Attachable tensionmeter for the determination of deformation characteristics of solids"
- PATENT ABSTRACTS OF JAPAN, Band 12, Nr. 243 (P-728)[3090], 9. Juli 1988;& JP-A-63 36 132

## Beschreibung

Die Erfindung betrifft eine Durchstoßvorrichtung für die Prüfung von plattenförmigen oder dünnen Werkstoffproben oder Bauteilen, insbesondere aus Kunststoffen, auf Durchstoßfestigkeit, insbesondere in Abhängigkeit von der Prüf- bzw. Durchstoßgeschwindigkeit, mit einem Durchstoßkörper, einem Gegenhalter zur Aufnahme eines Prüfkörpers, einer Betätigungsvorrichtung für den Gegenhalter, einer Kraftmeßeinrichtung zur Messung der ausgeübten Druckkraft sowie einer Wegmeßeinrichtung zur Messung der Eindringtiefe des Durchstoßkörpers.

Bei Durchstoßversuchen werden plattenförmige oder dünne Prüfkörper, z. B. Werkstoffproben oder Bauteile, vorzugsweise aus Kunststoffen, auf Durchstoßfestigkeit, insbesondere in Abhängigkeit von der Prüfgeschwindigkeit, geprüft. Hierbei wirkt ein Durchstoßkörper mit einem Gegenhalter, auf dem der Prüfkörper angeordnet wird und der eine Öffnung für die Aufnahme des Durchstoßkörpers aufweist, zusammen. Die Durchstoßkräfte und die Durchstoßwege werden zeitabhängig gemessen. Für die Kraftmessung werden z. B. geeignete piezo-elektrische Kraftmesser verwendet. Die Wegmessung wird bei bekannten Vorrichtungen mit induktiven Wegaufnehmern durchgeführt.

Bei einer bekannten Vorrichtung dieser Art ist der Durchstoßkörper fest angeordnet. Die Betätigungsvorrichtung wirkt auf den Gegenhalter und bewegt diesen in Richtung des Durchstoßkörpers und zurück. Der Prüfkörper ist fest, z. B. durch Verschrauben, mit dem Gegenhalter verbunden, wobei ggf. zusätzliche Einspannelemente verwendet werden. Durch die feste Verbindung des Prüfkörpers mit dem Gegenhalter ist der Probenwechsel umständlich und zeitraubend. Darüber hinaus entsprechen die bekannten Vorrichtungen dieser Art in Bezug auf die Wegmessung nur unvollkommen den Anforderungen an die Genauigkeit und an die dynamischen Eigenschaften solcher Systeme.

Es ist Aufgabe der vorliegenden Erfindung, eine Durchstoßvorrichtung zu schaffen, die einen einfachen und schnellen Probenwechsel ermöglicht. Das Meßsystem für die Wegmessung soll eine hohe Eigenfrequenz aufweisen. Diese Aufgabe wird durch die in den Patentansprüchen angegebenen Merkmale gelöst. Die Ansprüche betreffen auch vorteilhafte Ausgestaltungen der Erfindung.

Durch die Halterung des Prüfkörpers mit einem federbelasteten Klemmring wird ein einfacher und schneller Ein- und Ausbau des Prüfkörpers ermöglicht, wenn die Rückzugsbewegung des Gegenhalters zur Aufhebung der Federbelastung des Klemmrings verwendet wird. Das Klemmen und Lösen des Prüfkörpers erfolgt durch die auf einfache Weise steuerbare Bewegung des Gegenhalters bzw. der Betätigungsvorrichtung für den Gegenhalter praktisch selbsttätig. Hierbei ist es vorteilhaft, wenn der Klemmring durch federbelastete Bolzen mit Bolzenköpfen an dem Gegenhalter anpreßbar ist. Zweckmäßigerweise sind am Klemmring Durchgangsbohrungen für die Bolzenköpfe und daran anschließende Langlöcher für den Bolzenschaft angeordnet, so daß der Klemmring nach Aufhebung der Federbelastung durch Verdrehen leicht aufsetzbar bzw. abnehmbar ist.

Wenn am Klemmring ein Umlenkspiegel angeordnet ist, kann in Verbindung mit einer Lichtquelle und einem Lichtempfänger für den Lichtstrahl der Lichtquelle eine sehr genaue Wegmeßeinrichtung gebildet werden, die berührungslos arbeitet und eine hohe Eigenfrequenz aufweist.

Die Erfindung wird an einem Ausführungsbeispiel in der Zeichung dargestellt und in der Beschreibung näher erläutert. Die Patentzeichnung zeigt in schematischer Darstellung eine Durchstoßvorrichtung nach der Erfindung im Vertikalschnitt.

Die Durchstoßvorrichtung ist in eine nicht dargestellte Prüfmaschine eingebaut. Hierbei ist ein Druckstempel oder Durchstoßkörper 1 an einer Traverse 2 der Prüfmaschine befestigt. Im Durchstoßkörper ist eine Kraftmeßvorrichtung 3, z. B. ein piezo-elektrischer Kraftmesser, eingebaut. Mit dem Durchstoßkörper 1 ist ein flacher Umlenkspiegel 4 verbunden, der einen von einer Lichtquelle 5 kommenden Lichtstrahl 5a, z. B. einen Laser-Strahl, in Durchstoßrichtung umlenkt (Lichtstrahl 5b).

In einer Tischplatte 6 der Prüfmaschine ist eine Betätigungsvorrichtung 7, z. B. in Form eines doppelt wirkenden hydraulischen Belastungszylinders, mit Belastungskolben 8 eingebaut. Mit dem Belastungskolben 8 ist ein Gegenhalter 9 verbunden, auf dem ein Prüfkörper 10 befestigt werden kann. Der Gegenhalter 9 wird durch den Belastungskolben 8 in Durchstoßrichtung und zurück bewegt (s. Doppelpfeil). Er ist zur Aufnahme des Druckstempels 1 hohl ausgebildet. Der Durchstoßkörper 1 ist an der Traverse 2 fest angebaut.

Zur Befestigung des Prüfkörpers 10 auf dem Gegenhalter 9 ist ein Klemmring 11 vorgesehen. Dieser preßt über federbelastete Bolzen 12 mit Bolzenköpfen 12a, 12b und Federn 13 den Prüfkörper 10 auf den Gegenhalter 9. Zum Ein- und Ausbau des Prüfkörpers 10 wird der Gegenhalter 9 durch den Belastungskolben 8 in Richtung der Tischplatte 6 bewegt, bis die Köpfe 12a der Bolzen 12 auf der Tischplatte aufliegen. Bei der weiteren Rückzugsbewegung des Gegenhalters werden die vorgespannten Federn 13 weiter zusammengedrückt und damit der Klemmring 11 bzw. der Prüfkörper 10 freigegeben.

Der Klemmring 11 weist Durchgangsbohrungen 14 für die Bolzenköpfe 12b und daran anschließende Langlöcher 15 für den Bolzenschaft der Bolzen 12 auf. Nach Einlegen des Prüfkörpers 10 in den Gegenhalter 9 kann daher der Klemmring 11 zunächst von oben auf den Prüfkörper bzw. Gegenhalter aufgesetzt werden. Durch Verdrehen des Klemmrings werden die Bolzenköpfe 12b nach Aufbringung der Federbelastung wieder mit dem Klemmring in Eingriff gebracht und der Prüfkörper wird mit der gewünschten Einspannkraft festgeklemmt. Zum Herausnehmen des Prüfkörpers nach dem Versuch wird in umgekehrter Reihenfolge verfahren (Aufhebung der Federbelastung des Klemmrings, Verdrehen und Herausnehmen des Klemmrings, Herausnehmen des Prüfkörpers). Auf diese Weise ist ein besonders leichter und schneller Ein- und Ausbau bzw. Wechsel des Prüfkörpers 10 möglich.

Am Klemmring 11 ist ein kegelförmiger Umlenkspiegel 16 angeordnet. Dieser Spiegel lenkt den von der Lichtquelle 5 kommenden und von einem flachen Umlenkspiegel 4 am Durchstoßkörper 1 in Durchstoßrichtung umgelenkten Lichtstrahl 5a, 5b auf einen Lichtempfänger 17. Lichtempfänger 15 und Lichtquelle 5 sind feststehend angeordnet. Die Kegelform des Umlenkspiegels 14 verhindert unerwünschte Strahlabweichungen des Lichtstrahls 5c bei Verdrehung des Klemmrings 11 bzw. des Gegenhalters 9.

Der Lichtempfänger 17 ist als Positionsdetektor ausgebildet, der lichtempfindliche Elemente oder Fotodioden aufweist. Der vom Umlenkspiegel 16 kommende Lichtstrahl 5c erzeugt auf dem Positionsdetektor bei Bewegung des Umlenkspiegels bzw. des Gegenhalters 9 in Durchstoßrichtung einen Lichtstrich. Dieser Lichtstrich wird im Positionsdetektor z. B. in eine elektrische Spannung umgewandelt. In Verbindung mit einer Auswerteeletronik kann diese Spannung unmittelbar als Weg ausgewertet und z. B. dargestellt oder weiterverarbeitet werden. In Verbindung mit dem kegelförmigen Umlenkspiegel 16 am Klemmring 11 ergibt sich damit eine berührungslos arbeitende Wegmeßeinrichtung, welche die bei Durchstoßversuchen erwünschten dynamischen Eigenschaften und Genauigkeiten aufweist.

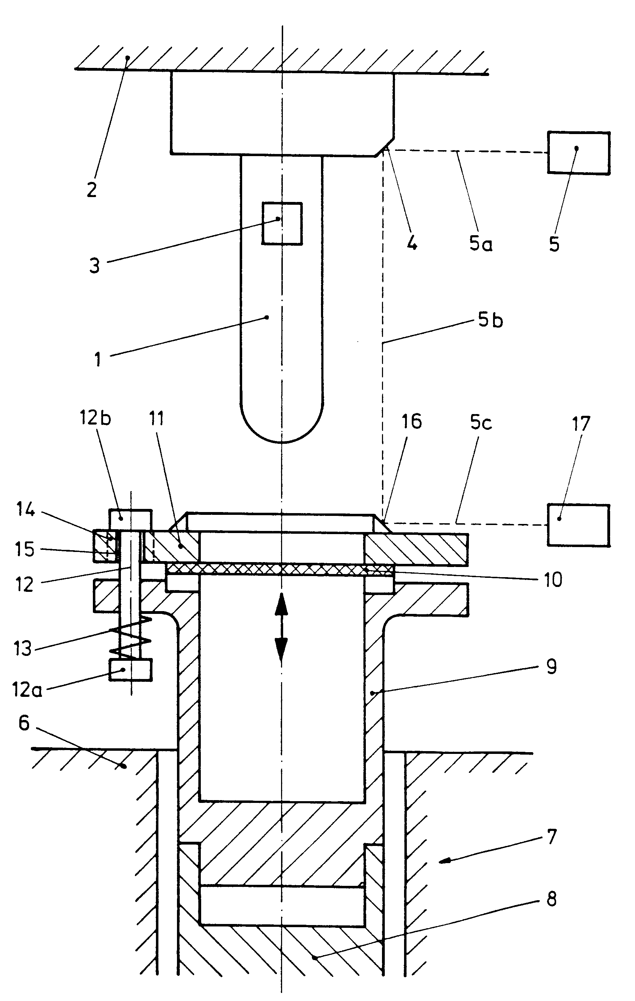

## Patentansprüche

1. Durchstoßvorrichtung für die Prüfung von plattenförmigen oder dünnen Werkstoffproben oder Bauteilen, insbesondere aus Kunststoffen, auf Durchstoßfestigkeit, insbesondere in Abhängigkeit von der Prüf- bzw. Durchstoßgeschwindigkeit, mit einem Durchstoßkörper (1), einem Gegenhalter (9) zur Aufnahme eines Prüfkörpers (10), einer Betätigungsvorrichtung (7) für den Gegenhalter (9), einer Kraftmeßeinrichtung (3) zur Messung der ausgeübten Druckkraft sowie einer Wegmeßeinrichtung (4, 5, 16, 17) zur Messung der Eindringtiefe des Durchstoßkörpers (1), dadurch gekennzeichnet, daß der Gegenhalter (9) einen federbelasteten Klemmring (11) zum Anpressen des Prüfkörpers (10) an den Gegenhalter (9) aufweist und daß bei einer Rückzugsbewegung des Gegenhalters (9) ein Anschlag (6) in Eingriff kommt, der eine Aufhebung der Federbelastung des Klemmrings (11) zum Ein- und Ausbau des Prüfkörpers (10) bewirkt.

2. Durchstoßvorrichtung nach Anspruch 1, dadurch gekennzeichnet, daß der Klemmring (11) durch federbelastete Bolzen (12) mit Bolzenköpfen (12a, 12b) an den Gegenhalter (9) anpreßbar ist.

3. Durchstoßvorrichtung nach Anspruch 2, dadurch gekennzeichnet, daß die Federbelastung des Klemmrings (11) bei der Rückzugsbewegung des Gegenhalters (9) durch Anlage der Bolzenköpfe (12a) an einer Tischplatte (6) oder dgl. aufhebbar ist.

4. Durchstoßvorrichtung nach Anspruch 2 oder 3, dadurch gekennzeichnet, daß der Klemmring (11) Durchgangsbohrungen für die Bolzenköpfe (12b) und daran anschließende Langlöcher für den Bolzenschaft aufweist, so daß der Klemmring (11) auf den Gegenhalter (9) aufsetzbar ist und nach Aufhebung der Federbelastung durch Verdrehen mit dem Gegenhalter (9) in Eingriff gebracht werden kann bzw. vom Gegenhalter abnehmbar ist.

5. Durchstoßvorrichtung nach einem der vorhergehenden Ansprüche, dadurch gekennzeichnet, daß der Klemmring (11) einen Umlenkspiegel (16) aufweist, der einen von einer Lichtquelle (5) kommenden Lichtstrahl (5b) aus der Durchstoßrichtung vorzugsweise um 90° auf einen Lichtempfänger (7) mit angeschlossener Auswerteelektronik umlenkt.

6. Durchstoßvorrichtung nach Anspruch 5, dadurch gekennzeichnet, daß der Umlenkspiegel (16) kegelförmig ausgebildet ist.

7. Durchstoßvorrichtung nach Anspruch 5 oder 6, dadurch gekennzeichnet, daß zwischen Lichtquelle (5) und kegelförmigem Umlenkspiegel (16) ein weiterer flacher Umlenkspiegel (4) am Durchstoßkörper (8) angeordnet ist.

## Claims

1. Penetration device for testing panel-shaped or thin samples of material or components - in particular those made from plastics - for their penetration resistance, particularly in dependance on the test or penetration speed, with a penetrating body (1), a holder (9) to receive a test piece (10), an operating mechanism (7) for the holder (9), a force sensing device (3) to measure the exerted force of pressure as well as a distance measuring system (4, 5, 16, 17) to measure the penetration depth of the penetrating body (1), characterised in that the holder (9) has a spring loaded locking ring to press the test piece (10) against the holder (9), and that upon a retraction of the holder (9) a limit stop (6) engages, lifting the spring loading of the locking ring (11) for the mounting and removal of the test piece (10).

2. Penetration device according to claim 1, characterised in that the locking ring (11) can be pressed against the holder (9) by means of spring loaded bolts (12) with bolt heads (12a, 12b).

3. Penetration device according to claim 2, characterised in that the spring loading of the locking ring (11) can be lifted upon retraction of the holder (9) by laying the bolt heads (12a) against a table top (6) or the like.

4. Penetration device according to claims 2 or 3, characterised in that the locking ring (11) has through holes for the bolt heads (12b) followed by elongated slots for the bolt shank, so that the locking ring (11) can be placed upon the holder (9) and after lifting of the spring loading can be engaged with or disengaged from the holder (9) by means of twisting.

5. Penetration device according to any one of the preceding claims characterised in that the locking ring (11) has a deflecting mirror (16) which deflects a light beam (5b) coming from a light source (5) from the direction of the penetration preferably by 90° towards a light receiver (7) with connected electronic processing unit.

6. Penetration device according to claim 5, characterised in that the deflecting mirror (16) is cone-shaped.

7. Penetration device according to claim 5 or 6, characterised in that between the light source (5) and the cone-shaped deflecting mirror (16) there is a further flat tilted mirror (4) on the penetrating body (8).

## Revendications

1. Dispositif d'essais de perforation pour échantillons de matériau ou éléments de construction en forme de plaque, ou mince, en particulier en matière synthétique, pour déterminer la résistance à la perforation en particulier en fonction de la vitesse de l'essai ou de la perforation, comportant un corps de perforation (1), un contre-support (9) destiné à recevoir un corps d'essais (10), un dispositif d'actionnement (7) pour le contre-support (9) un dispositif de mesure des efforts (3), destiné à mesurer la force de pression exercée, ainsi qu'un dispositif de mesure de déplacement (4, 5, 16, 17) destiné à mesurer la profondeur de pénétration-perforation du corps de perforation (1), caractérisé en ce que le contre-support (9) présente une bague de serrage (11) sollicitée élastiquement en vue de presser le corps d'essais (10) sur le contre-support (9) et en ce que lors du déplacement de recul du contre-support (9) entre en action une butée (6) qui provoque la suppression de la sollicitation élastique de la bague de serrage (11) en vue d'opérer la mise en place et le démontage du corps d'essais (10).

2. Dispositif d'essais de perforation selon la revendication 1, caractérisé en ce que la bague de serrage (11) pouvant être pressée sur le contre-support (9) au moyen de têtes de boulon (12a, 12b).

3. Dispositif d'essais de perforation selon la revendication 2, caractérisé en ce que la sollicitation élastique de la bague de serrage (11) pouvant être supprimée lors du déplacement de recul du contre-support (9), par appui des têtes de boulon (12a) sur une plaque de table (6) ou analogue.

4. Dispositif d'essais de perforation selon la revendication 2 ou 3, caractérisé en ce que la bague de serrage (11) présente des trous de passage pour les têtes de boulon (12b) et des trous allongés s'y raccordant, laissant passer le fût du boulon, de façon que la bague de serrage (11) puise être appliquée sur le contre-support (9) et qu'après suppression de la sollicitation élastique, par rotation elle puisse être mise en contact ou écartée du contre-support, par une rotation, à l'aide du contre-support (9).

5. Dispositif d'essais de perforation selon l'une des revendications précédentes, caractérisé en ce que la bague de serrage (11), présente un miroir de déviation (16) provoquant la déviation d'un rayon lumineux (5b) provenant d'une source lumineuse (5), par rapport à la direction de perforation, de préférence de 90°, vers un photorécepteur (17) comportant comportant une électronique d'exploitation raccordée.

6. Dispositif d'essais de perforation selon la revendication 5, caractérisé en ce que le miroir de déviation (16) est de forme conique.

7. Dispositif d'essais de perforation selon la revendication 5 ou 6, caractérisé en ce qu'entre la source lumineuse (5) et le miroir de déviation conique (16) est disposé un autre miroir de déviation (4) plat, monté sur le corps de perforation.
